# EUROPEAN PATENT SPECIFICATION

(11) **EP 2 668 572 B1**
(45) Date of publication and mention of the grant of the patent: **09.12.2015**
(21) Application number: 12704146.5
(22) Date of filing: 12.01.2012
(51) Int. Cl.: G06F 3/14, G09G 5/14, G06F 3/0488, G06F 9/54, G06F 9/44

(54) **METHOD AND APPARATUS FOR LOCKING AND UNLOCKING MULTIPLE OPERATING SYSTEM ENVIRONMENTS WITH A SINGLE GESTURE INPUT**
VERFAHREN UND VORRICHTUNG ZUM VERRIEGELN UND ENTRIEGELN MEHRERER BETRIEBSSYSTEMUMGEBUNGEN MIT EINER EINZIGEN GESTENEINGABE
PROCÉDÉ ET APPAREIL PERMETTANT DE VERROUILLER ET DE DÉVERROUILLER DE MULTIPLES ENVIRONNEMENTS D'UN SYSTÈME D'EXPLOITATION AU MOYEN D'UNE SEULE ENTRÉE GESTUELLE

(30) Priority: 25.01.2011 US 201113013341
(43) Date of publication of application: 04.12.2013
(73) Proprietor: Motorola Mobility LLC, Libertyville, IL 60048 (US)
(72) Inventor: WANG, Haitang, Sunnyvale California 94086 (US); DHARAWAT, Parikshit H., Sunnyvale California 94086 (US); GAN, Su-Yin, Santa Clara California 95054 (US); ROOT, Michael A., Waukegan Illinois 60085 (US)
(74) Representative: Boult Wade Tennant
(86) International application number: PCT/US2012/021033
(87) International publication number: WO 2012/102865

(56) References cited:
- EP-A1- 1 688 816
- US-A1- 2006 010 314
- US-A1- 2007 150 842
- US-A1- 2010 333 088
- TATSUO NAKAJIMA ET AL: "Composition Kernel: A Multi-core Processor Virtualization Layer for Rich Functional Smart Products", 13 October 2010 (2010-10-13), SOFTWARE TECHNOLOGIES FOR EMBEDDED AND UBIQUITOUS SYSTEMS, SPRINGER BERLIN HEIDELBERG, BERLIN, HEIDELBERG, PAGE(S) 227 - 238, XP019154290, ISBN: 978-3-642-16255-8 the whole document

## Description

### Field of the Invention

The present invention relates generally to multi-environment operating systems and in particular, to a method and apparatus for locking and unlocking multiple operating system environments.

### Background of the Invention

Some mobile devices have the capability to utilize multiple run-time environments simultaneously on a single processor. A user of such a device may operate a first operating environment (e.g., Android) and a second operating environment (e.g., GNU Linux) simultaneously. When operating such a device, at least two co-existing independent middleware operating environments coupled to a core kernel are provided where the middleware operating environments each have a corresponding application component.

When a single display device is utilized as a user interface to a mobile device running multiple operating system environments (e.g., Android and GNU Linux), there may exist two windows on the display device. A first window may exist on a first portion of the display (e.g., an Android window that shows the Android environment). A second window, or background window may also exist on the display (e.g., a background window showing a GNU Linux desktop environment).

Currently screen unlock mechanisms in both systems co-exist and conflict with each other. In other words, each operating system environment locks and unlocks its window independently of the other operating system environment. Having multiple unlocks for multiple windows can be confusing to the user. Therefore a need exists for a method and apparatus for locking and unlocking multiple operating system environments in a multi-environment operating system that eliminates the confusion the user experiences with having to unlock multiple environments.

US patent application publication no. US 2010/0333088 describes a virtualized mobile device including virtualization software that supports one or more virtual machines and further includes: (a) device emulation software that communicates with device driver software in the one or more virtual machines; (b) device driver software that communicates with one or more physical devices of the mobile device; and (c) transformer stack software that interacts with the device emulation software and the device driver software.

### Summary

In accordance with the present invention, there is provided a method and device as recited in the accompanying claims.

### Brief Description of the Drawings

FIG. 1 is an exemplary perspective view of a mobile device; FIG. 2 is a block diagram representing an exemplary operating system;
FIG. 3 is a block diagram of an exemplary operating system;
FIG. 4 is a block diagram of a runtime co-existence schema of an exemplary operating system; FIG. 5 is block diagram of an inter-environment communication schema of an exemplary operating system;
FIG. 6 is a flow chart identifying steps in a booting sequence for an exemplary operating system;
FIG. 7 is a flow chart identifying exemplary steps for launching an application in a first operating environment while an exemplary operating system is controlled by a second operating environment;
FIG. 8 is a message sequence chart identifying exemplary steps for launching a second operating environment application while a first operating environment has primary control;
FIG. 9 is a flow chart identifying exemplary steps associated with switching from a first operating environment to a second operating environment;
FIG. 10 is a message sequence chart identifying exemplary steps for switching from a first operating environment to a second operating environment;
FIG. 11 is a message sequence chart identifying exemplary steps for switching from a second operating environment to a first operating environment;
FIG. 12 is a flow chart identifying exemplary use of an application controlled by a first operating environment while a second operating environment has primary control of a computing device.
FIG. 13 illustrates a user interface running multiple operating environments.
FIG. 14 is a block diagram of a device capable of running multiple operating environments.
FIG. 15 is a flow chart showing operation of the device of FIG. 14.
FIG. 16 is a flow chart showing operation of the device of FIG. 14.

Skilled artisans will appreciate that elements in the figures are illustrated for simplicity and clarity and have not necessarily been drawn to scale. For example, the dimensions and/or relative positioning of some of the elements in the figures may be exaggerated relative to other elements to help to improve understanding of various embodiments of the present invention. Also, common but well-understood elements that are useful or necessary in a commercially feasible embodiment are often not depicted in order to facilitate a less obstructed view of these various embodiments of the present invention. It will further be appreciated that certain actions and/or steps may be described or depicted in a particular order of occurrence while those skilled in the art will understand that such specificity with respect to sequence is not actually required. Those skilled in the art will further recognize that references to specific implementation embodiments such as "circuitry" may equally be accomplished via replacement with software instruction executions either on general purpose computing apparatus (e.g., CPU) or specialized processing apparatus (e.g., DSP). It will also be understood that the terms and expressions used herein have the ordinary technical meaning as is accorded to such terms and expressions by persons skilled in the technical field as set forth above except where different specific meanings have otherwise been set forth herein.

### Detailed Description of the Drawings

In order to alleviate the above-mentioned need, a device and method for unlocking multiple operating system environments in a multi-environment operating system is provided herein. The device and method provide for a single unlocking gesture to unlock multiple operating system environments. During operation, a processor running a first operating system environment will receive a first unlocking gesture for a first graphical user interface. If the first gesture is the correct gesture for unlocking the first user interface, then the first operating system environment will unlock the first user interface. A message will then be sent by the first operating system environment to the second operating system environment, causing the second operating system environment to unlock a second user interface being utilized by the second operating system environment. Because a single unlocking gesture is used to unlock interfaces used by multiple operating system environments, user confusion is reduced.

The present invention encompasses a method comprising the steps of running a first operating system environment on a processor using a first window as a first graphical user interface (GUI), running a second operating system environment on the processor using a second window as a second graphical user interface (GUI), and determining a locking event has occurred. When the locking event has occurred, the first window is locked by the first operating system in response to the locking event. A notification is sent from the first operating system environment to the second operating system environment and the second window is locked by the second operating system environment in response to the notification.

The present invention further encompasses an apparatus comprising a processor existing on a device. The processor performs the steps of running a first operating system environment using a first window as a first graphical user interface (GUI), running a second operating system environment using a second window as a second graphical user interface (GUI), determining a locking event has occurred, locking the first window locked in response to the locking event, sending a notification from the first operating system environment to the second operating system environment, and locking the second window in response to the notification.

The present invention additionally encompasses a system comprising a device using a display on the device as a graphical user interface, and an external display coupled to the device, wherein the external display comprises a first window and a second window, wherein the first window replicates the display on the device. A processor is provided existing on the device running a first operating system environment, running a second operating system environment, receiving a locking event, locking the first window in response to the locking event, wherein the first window is locked by the first operating system environment, sending a notification from the first operating system environment to the second operating system environment, and locking the second window in response to the notification, wherein the second window is locked by the second operating system environment.

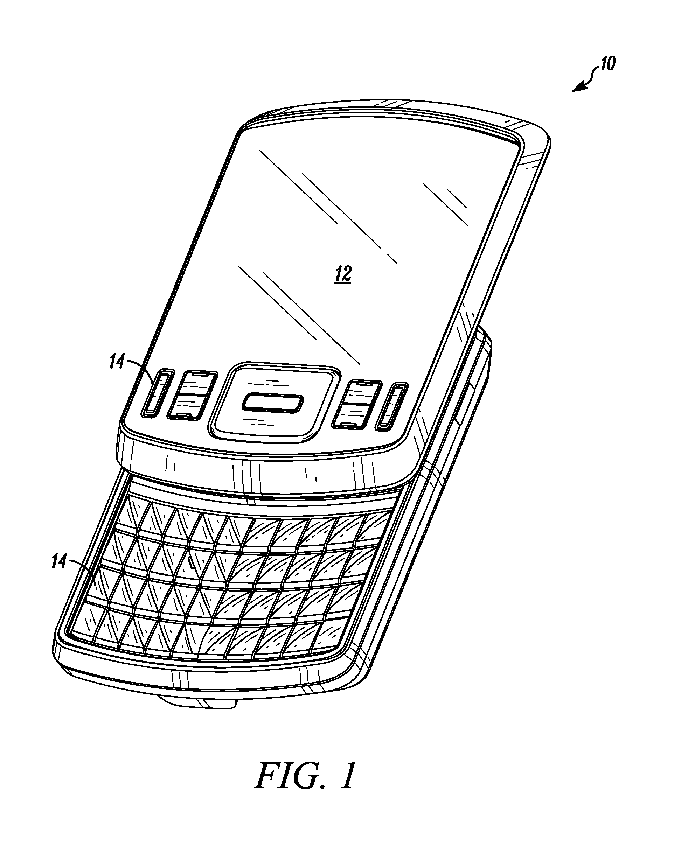

Turning now to the drawings, where like numerals designate like components, FIG. 1 is a block diagram showing a mobile telephone 10. The telephone 10 includes a GUI 12 and a plurality of data input buttons 14. The mobile device 10 is selected from the group including, but not limited to, a mobile personal computer (PC), a netbook, a tablet computer, a mobile telephone, a laptop computer, a handheld computer and a smart phone. Although the device 10 is mobile, it is intended to have significant computing power, with a processor speed in excess of 500 mHz, although slower processors are not excluded. Considering the computing power, a user can connect the device 10 to a variety of peripheral devices (not shown). The peripheral devices are selected from a group including, but not limited to, computer monitor, a laptop computer, a desktop computer, a tablet PC, and a screen projector.

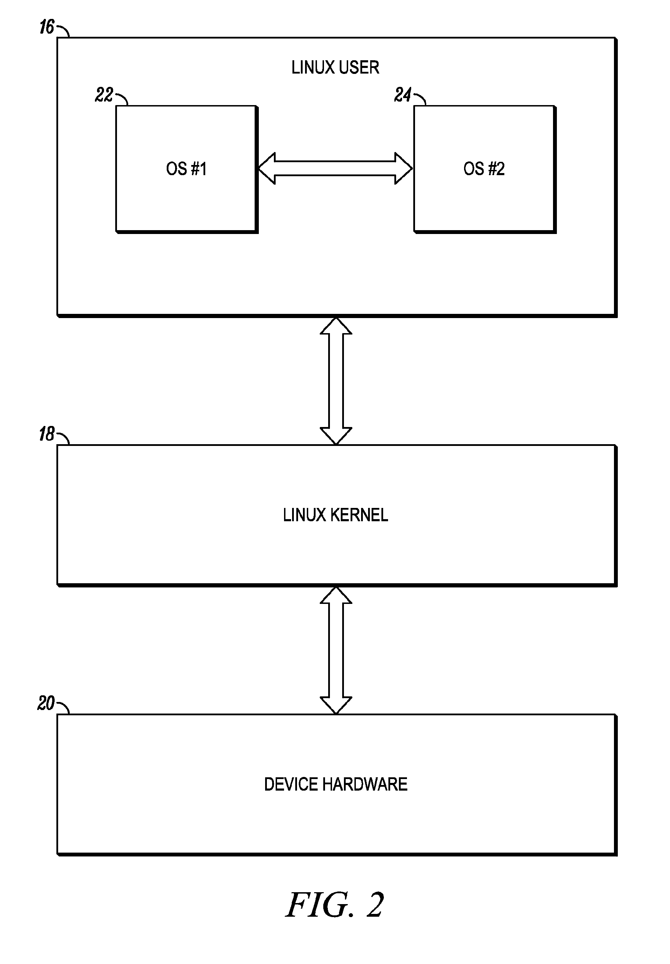

Now referring to FIG. 2, a block diagram of an exemplary operating system (OS) 16 in communication with a kernel 18 is provided. The OS 16 can be a Linux distribution system, a Linux-based operating system or a non-Linux-based operating system. The device hardware 20 is also in communication with the Linux kernel 18. The operating system 16 includes a first operating system environment 22 and a second operating system environment 24 in communication with a single Linux kernel 18. By example, the second middleware operating system environment 24 is a standard Linux distribution and the first middleware operating system environment 22 is an embedded operating system environment intended for use in mobile devices, such as an Android^{™} (Open Handset Alliance, www.openhandsetalliance.com) operating system. A Linux distribution 16 is in communication with the Linux kernel 18, which is in communication with the device hardware 20. The device hardware 20 can be a memory storage device (not shown) coupled to a processor (not shown) which stores computer executable instructions which are configured to perform various functions and operations, as described herein.

An exemplary operating system 16 includes Ubuntu^{®} (Canonical Ltd., www.ubuntu.com) for the Linux-based operating system environment 24. It is specifically intended that multiple middleware operating system environments co-exist independent of the other(s). Exemplary environments that can be included in operating system 16include Android^{™} , Ubuntu^{®} (Canonical Ltd., www.ubuntu.com), standard Linux-based environments, Symbian (Symbian Foundation Ltd., www.symbian.com), and Windows-based environments. In an alternative embodiment, it is envisioned that greater than two operating system environments are configured to independently co-exist on the same core kernel 18.

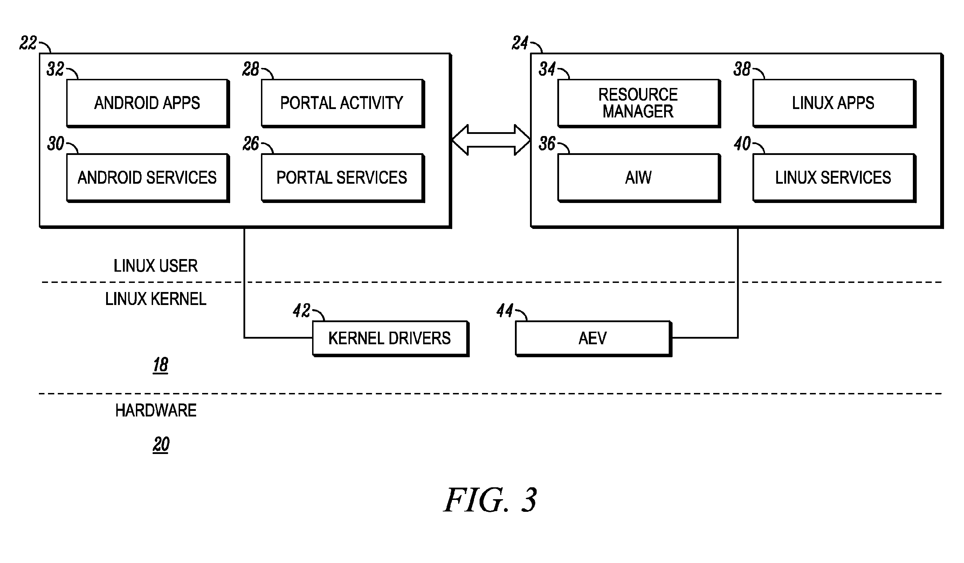

Referring to FIG. 3, a block diagram of an exemplary operating system is provided. In the present exemplary embodiment, the first OS environment 22 is an Android^{™} based operating environment and the second OS environment 24 is Linux-based. The first operating system environment 22 includes a portal service module 26, a portal activity module 28, an OS services module 30 and an OS applications module 32. The second operating system environment 24 includes a resource manager 34, an Android in a window (AIW) module 36, a second OS applications module 38 and a second OS services module 40.

The AIW module 36 is configured to display a first OS 22 application window on the GUI 12 while the second OS 24 is the primary operating environment.

The portal service module 26 contains a set of instructions configured to allow service for the first OS 22 and directs all communication with the resource manager 34. While the device 10 is operating the portal service module 26 is preferably running at all times. Additionally, the portal service module 26 is connected to activity associated with the portal activity module 28, as well as first OS 22 broadcast events. The portal activity module 28 is an application, or set of computer executable instructions, which represents a second OS 24 application located on the first OS 22 stack. By example, if the second OS 24 is Ubuntu^{®} the portal activity module 28 can represent a specific Ubuntu application, and when the portal activity module 28 has focus, Ubuntu is in view through the GUI 12. Numerous applications can run simultaneously, also referred to as a stack of running applications, within any given operating environment. Logically speaking, the topmost application is deemed to have "focus".

The kernel 18 includes a set of drivers 42 and an AEV module 44. Included with the drivers 42 are input device drivers for hardware components 20. The AEV 44 is a kernel module that takes absolute coordinate and keyboard events from AIW 36 and passes them to an event hub.

The co-existing environments within operating system 16 communicate with each other. The resource manager 34, which is part of the second OS 24, communicates directly with the portal service module 26, which is part of the first OS 22. Furthermore, the portal service module 26, which is part of the first OS 22, communicates directly with the resource manager 34. The resource manager 34 is a set of instructions configured to manage the resources shared by the first OS 22 and second OS 24. The shared resources include display devices, input devices, power management services and system state information. Furthermore, the resource manager 34 is configured to control OS 22, 24 access to the hardware 20. Additionally, the resource manager 34 identifies and controls which OS 22,24 user interface is displayed through the GUI 12.

According to the present embodiment, the portal service 26 is the source of all communications from the first OS 22 to the resource manager 34. Additionally, the portal service 26 is a sink for all callbacks from the resource manager 34 to the first OS 22. The resource manager provides a status discoverable application programming interface (API) to the portal service 26. This API is configured to be called by the resource manager 34 at any time. The resource manager 34 is configured to obtain and process runtime status, which allows for the resource manager to maintain a state machine. For the first OS 22, the portal service 26 provides runtime status to processes that require them. Similarly, the portal service 26 requests and receives status updates from processes which provide status information. A similar communication for the second OS 24 is controlled by the resource manager 34, which provides runtime status to the processes that require them. Resource manager 34 requests and receives status updates from various processes that provide status information. Device drivers 42 logically associated with the kernel 18 communicate directly with the resource manager 34 as well as the processes that provide runtime status information. By example, the API arbitrates access to user interface devices, such as displays, touch screens or the GUI 12. Yet another example, the API arbitrates access to power input devices, such as batteries and/or AC/DC wall plugs.

The first OS 22 and the second OS 24 are independent from the other, and co-exist with respect to the other. Each OS 22, 24 is a fully functioning operating system environment, and does not need the other operating system environment to function. The two operating system environments exist on the same device 10 with independence with respect to the other. As identified above, the first and second OS 22, 24 do not co-exist in a virtualization or emulation scheme, but in fact operate on a single kernel 18. Instead, there is runtime co-existence in which both OS 22, 24 run in their respective native environments and neither OS 22, 24 is recompiled, as there is no need to leverage a common C runtime environment. Applications which are coded purely for one or the other OS 22, 24 can be accessed by a user without an interruption to a user's computing experience.

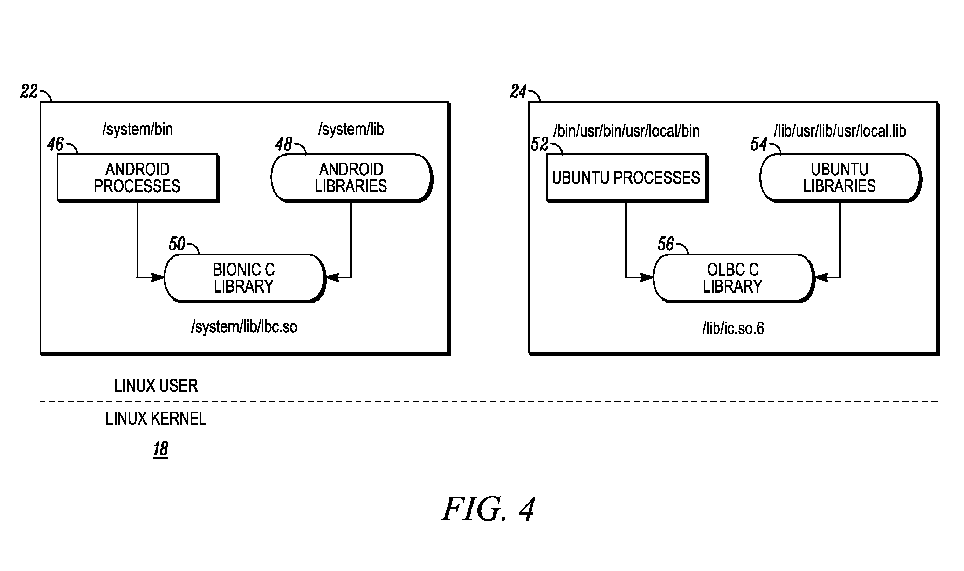

Referring to FIG. 4, a block diagram provides an exemplary co-existence scheme for an Android® OS 22 and an Ubuntu^{™} OS 24. Each OS 22, 24 operates on a separate runtime environment, which provides software services for programs and/or processes while the device 10 is operating. Android processes 46 and Android libraries 48 access a Bionic C Library 50, which is optimized and modified specifically for the Android environment. Ubuntu processes 52 and Ubuntu libraries 54 access a Glibc C Library 56, which is a GNU C library used in many standard desktop Linux-based systems. Each OS environment runs on its respective C libraries without conflicting another operating environment.

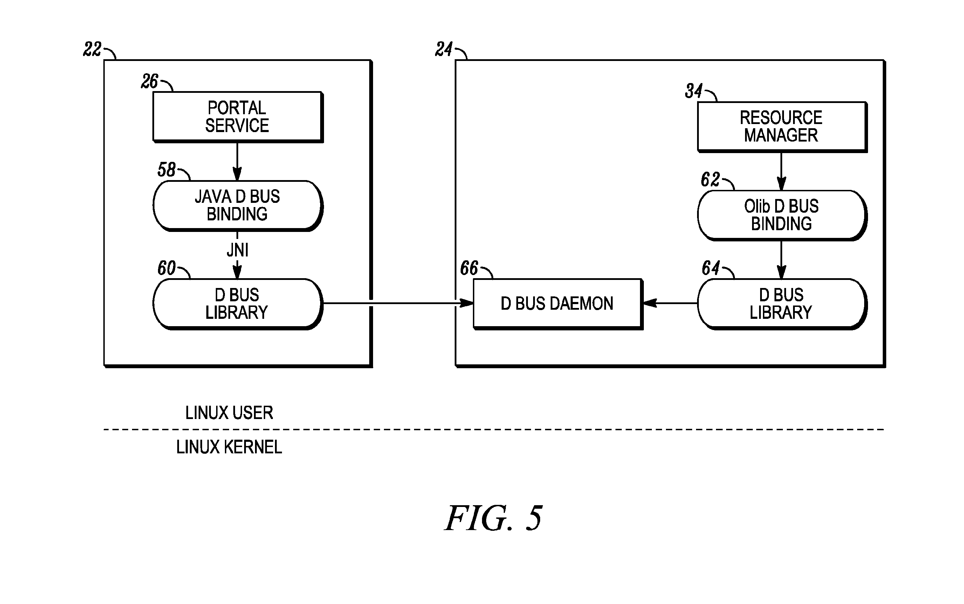

Referring to FIG. 5, a more detailed communication path between the first OS 22 and the second OS 24 described in FIG. 4 is provided. An inter-process communication (IPC) system is configured to manage the inter-environment communication flow between the first OS 22 and the second OS 24. The portal service 26 communicates with a DBUS Binding 58, which is a software package containing programming language and executable instructions configured to communicate with a DBUS library 60. The resource manager 34 communicates with a Glib DBUS binding 62, which also is a software package containing programming language and executable instructions configured to communicate with a DBUS library 64 configured for the second OS 24. Both the first OS 22 DBUS library 60 and the second OS 24 library 64 communicate through a DBUS Daemon 66, which is logically part of the second OS 24, and acts as the communication link between the two operating environments.

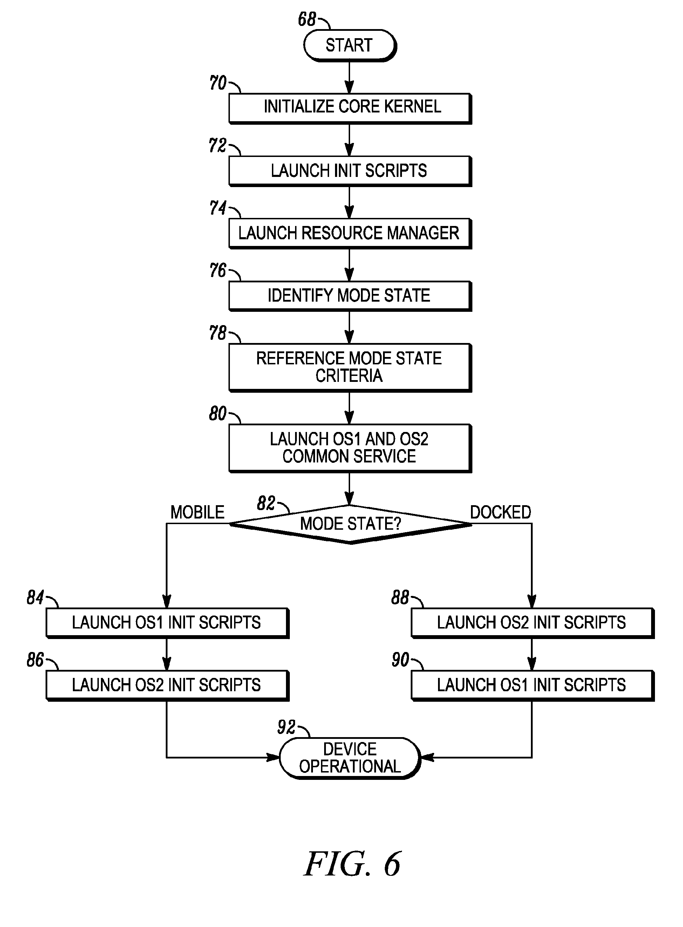

Referring to FIG. 6, a flow chart representing a boot sequence is provided. The boot sequence includes both common and operating system environment-specific steps. The actual boot sequence is dependent upon rules associated with a predetermined device state that dictates the booting sequence. By example, if the device is connected to a peripheral device, such as a monitor, the device state is considered to be in docked mode, and the second OS 24 is the default primary environment. Alternatively, if the device 10 is not connected to a peripheral device, then it is in mobile mode, and the first OS 22 is the default primary operating environment. However, the secondary operating environment is launched simultaneously with the primary environment, and operates in the background in case the device 10 state changes and the secondary environment is switched to become the primary environment. By example, when the device 10 is in docked mode and the peripheral device is unplugged, there is an automatic switch to mobile mode, which results in the secondary environment becoming the primary environment, and vice versa.

The boot sequence is initiated at step 68, followed by launching the core Linux kernel 18 at step 70. A bootloader program initializes prior to launching the kernel. After the Linux kernel 18 is initialized, the kernel launches user space scripts at step 72. The resource manager 34 is launched at step 74, followed by identifying the mode state at step 76. Once the mode state is identified a reference library is accessed at step 78 to determine the criteria associated with and/or dictated by the mode state that is identified. At step 80, the services common to both the first OS 22 and the second OS 24 are launched. The mode state determined at step 76 is referenced at step 82. If the mobile state is identified then the first OS 22 is the primary operating environment, then the first OS initialization scripts are launched at step 84, followed by the second OS initialization scripts launched at step 86. If the docked state is referenced at step 82, then the second OS 24 is the primary operating environment, and then the second OS 24 initialization scripts are launched at step 88 followed by launching the first OS 22 initialization scripts at step 90. Regardless of which environment is the primary, both environments are launched and running before the device 10 is operational at step 92. Since the common services are launched first at step 80, for all intents and purposes the primary and secondary environments are launched in parallel. However, the primary environment-specific services, based upon the device state, are launched immediately before the secondary environment-specific services. By separating the common services launch with the environment-specific launch, the device 10 can be quickly operational with multiple co-existing and independent operating environments.

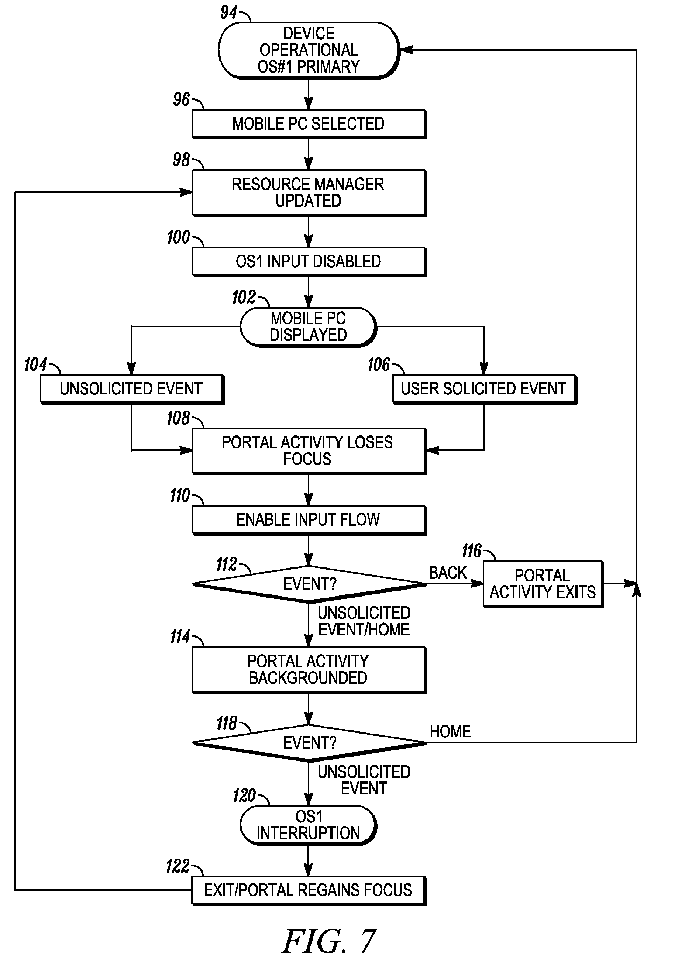

Referring to FIG. 7, a flow chart identifying steps for launching a second OS 24 application while the device 10 is in mobile mode 94 and the first OS 22 has primary control. A second OS 24 application, Mobile PC, is selected at step 96. Mobile PC is an application in the first OS 22 which provides a full PC view, alternatively referred to as a netbook view, while the device 10 is operating in mobile mode and the first OS 22 is in primary control. In an alternative embodiment, individual applications from the second OS 24 can be listed in a first OS 22 menu and individually launched, which can be similar to a netbook view.

The portal service 26 sends a status update communication to the resource manager 34 at step 98 indicating that the portal activity 28 has gained focus. Thereafter, the resource manager 34 disables the first OS 22 input and switches a virtual terminal at step 100. The mobile PC application is displayed on the GUI 12 at step 102. While operating the mobile PC application an unsolicited event can occur at step 104 or a user-solicited event can occur at step 106. Unsolicited events include time critical and non-time critical events. By example, a time critical unsolicited event includes a phone call or a scheduled or unscheduled alarm. Furthermore, by example, a non-time critical unsolicited event includes a SMS message, an email message or a device update notification. After an event 104,106 occurs the portal service 26 sends a communication to the resource manager 34 indicating that the portal activity 28 has lost focus at step 108. At step 110, the resource manager 34 requests the first OS 22 to enable input event flow and switches the virtual terminal. By example, the present embodiment includes separate virtual terminals for switching display control between the first OS 22 and the second OS 24. Broadly speaking, a virtual terminal is a Linux application that allows a system user to switch display controls between Windows based view and a system console.

When an unsolicited event occurs or a user selects the "Home" key at step 112, the portal activity 28 is switched to the background at step 114 while the unsolicited event continues or the user operates another application from the "Home" menu of the GUI 12. Alternatively, if the user selects the "Back" key at step 112, then the portal activity 28 exits the application and the device 10 reverts to the idle main menu at step 94. User-initiated events, such as selecting the Home key, Back key, or initiating a new application are exemplary solicited events. When an event occurs a decision is made at step 118, and the first OS 22 is interrupted at step 120 if the event is an unsolicited event. Alternatively, if the event is a solicited event, such as the user selecting the "Home" key, then the device reverts to the idle main menu at step 94. After the OS interruption at step 120, the interrupting application exits and the portal activity 28 regains focus at step 122 and the device 10 reverts to step 98.

In an alternative embodiment, the virtual terminal facility is not utilized. Rendering a second OS 24 application while in the mobile mode can be accomplished through a VNC-like application. The second OS 24 application, such as Ubuntu, can be rendered remotely into the VNC client. Additionally, this embodiment doesn't take physical display control away from the first OS 22.

In yet another alternative embodiment, non time-critical notifications generated by the first OS 22 are identified and listed in a panel within the second OS 24 view. By listing the notifications in a panel the first OS 22 status information is integrated with the second OS 24 view when the second OS 24 is the primary OS. At the user's leisure, the panel is accessed to reveal non time-critical status notifications. When the panel is engaged the first OS 22 becomes the primary OS and allows the notifications to be viewed. By example, the panel can be a pull-down list that comes down from a status area with a slide gesture.

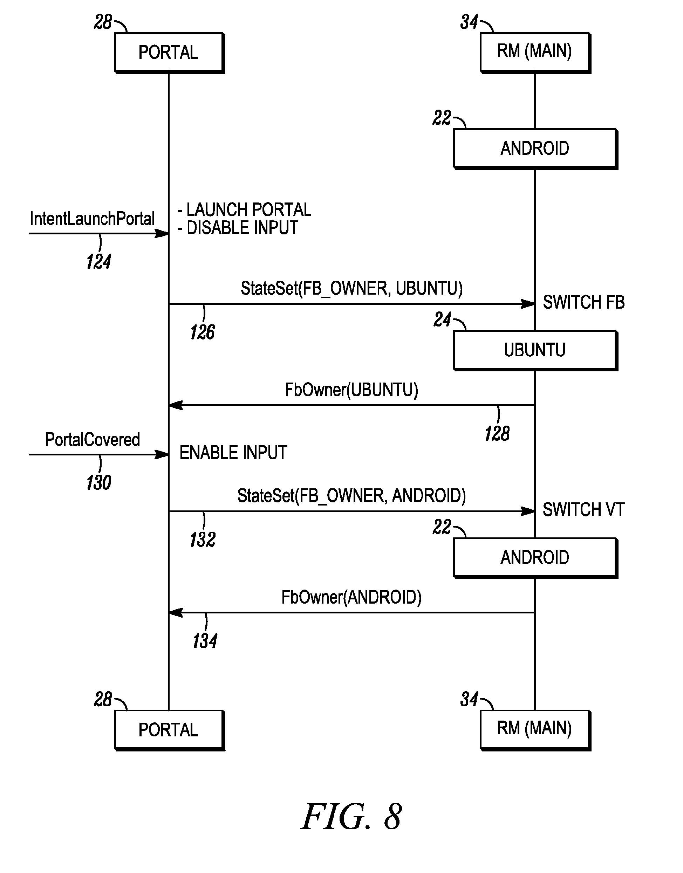

Referring to FIG. 8, a message sequence chart identifying the steps for launching a second OS 24 application while the first OS 22 has primary control is provided. The sequence chart provides a step wise flow, from top to bottom, of the signals transmitted between the portal activity module 28 and the resource manager 34. The portal activity 28 receives a signal 124 to launch the portal and disable the input. The first OS 22 has primary control before signal 126 changes the mode state to the second OS 24 obtaining primary control. Signal 126 is sent from the portal activity 28 to the resource manager 34, which then generates a responsive signal 128 sent to the portal activity 28 indicating that the second OS 24 is the primary OS. Signal 130 is received by the portal activity 28 and enables the input. Signal 132 is sent from the portal activity 28 to the resource manager 34 changing the mode state of from the second OS 24 to the first OS 22. After receiving signal 132 the resource manager 34 switches the virtual terminal. The resource manager 34 then sends a status update signal 134 to the portal activity 28 indicating that the first OS 22 is primary.

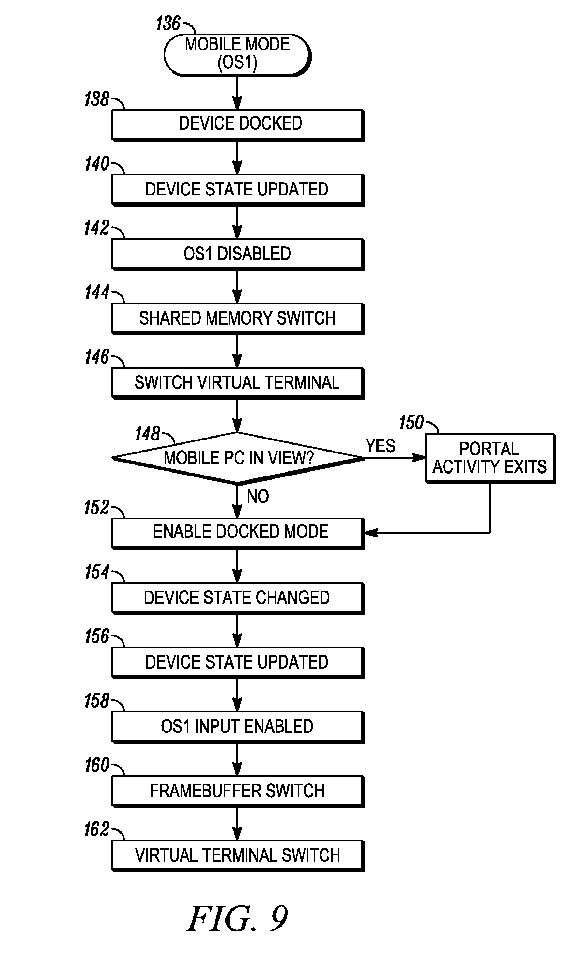

Referring to FIG. 9, a flow chart identifying steps associated with switching from a first operating environment to a second operating environment is provided. The device 10 is idle in the mobile mode (OS1 22) at step 136. At step 138 the device 10 is connected to a docking station, or connected to a peripheral device. By example, an HDMI connection can be established between the device 10 and a monitor or a television. The resource manager 34 is notified of the updated connection status at step 140 and the first OS 22 is disabled at step 142 in response to the connection status change. The first OS 22 portal switches the shared memory frame buffer at step 144, followed by the resource manager 34 switching the virtual terminal at step 146. If the Mobile PC application is in view at step 148, then the portal activity 26 exits at step 150. Alternatively, if the Mobile PC application is not in view, then the docked mode is enabled at step 152. In the event that the device state changes at step 154, then the resource manager 34 receives a status state update at step 156. By example, the state of the system changes when a user removes an HDMI cable, or similar connector, which is used for connecting the device 10 to a peripheral device. Following an event state update 156, the first OS 22 is enabled 158 and the device operates in mobile mode. A frame buffer switch is requested at step 160 and a virtual terminal switch is requested at step 162, both of which are performed by the portal activity 26. Following step 162, the device reverts to an idle state in the mobile mode 136.

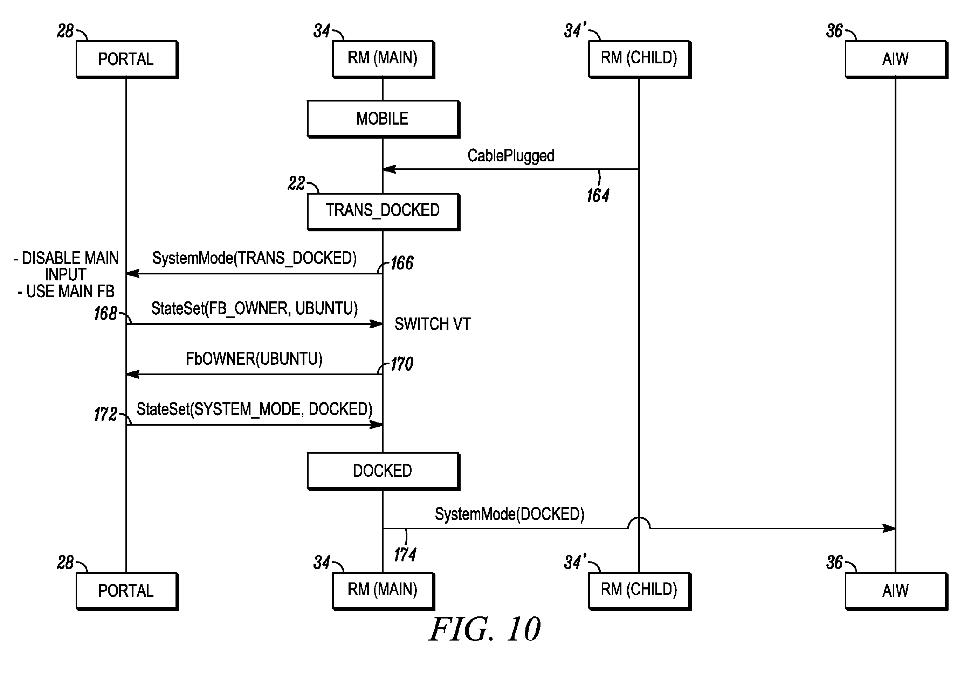

Referring to FIG. 10, a message sequence chart identifying the steps performed when the device 10 transitions from mobile mode (OS1) to docked mode (OS2) is provided. The device 10 is operating in mobile mode and the first OS 22 is the primary OS. A cable signal 164 is received by the resource manager 34, which indicates that an HDMI or alternate hardwire plug has been attached to the device 10. The cable signal 164 is an exemplary mode state initialization change signal. In an alternative embodiment, the plug can be wireless communication between the device 10 and a peripheral device, and disabling the wireless communication would cause a mode state initialization change signal to be generated. A sequence of signals transitioning the device from mobile mode to docked mode is initiated. Signal 164 is sent from the resource manager 34 to the portal activity 28 indicating a mode status transition and disabling the main data input. The portal activity 28 sends signal 168 to the resource manager 34 identifying the second OS 24 is now primary and switching the virtual terminal. Signal 170 is sent from the resource manager 34 to the portal activity identifying the second OS 24 as the primary and has taken ownership of the framebuffer. A mode state change confirmation signal 172 is sent from the portal activity 28 to the resource manager 34 identifying that the device is now in docked mode and that the second OS 24 is the primary OS. A system mode update signal is sent from the resource manager 34 to AIW 36.

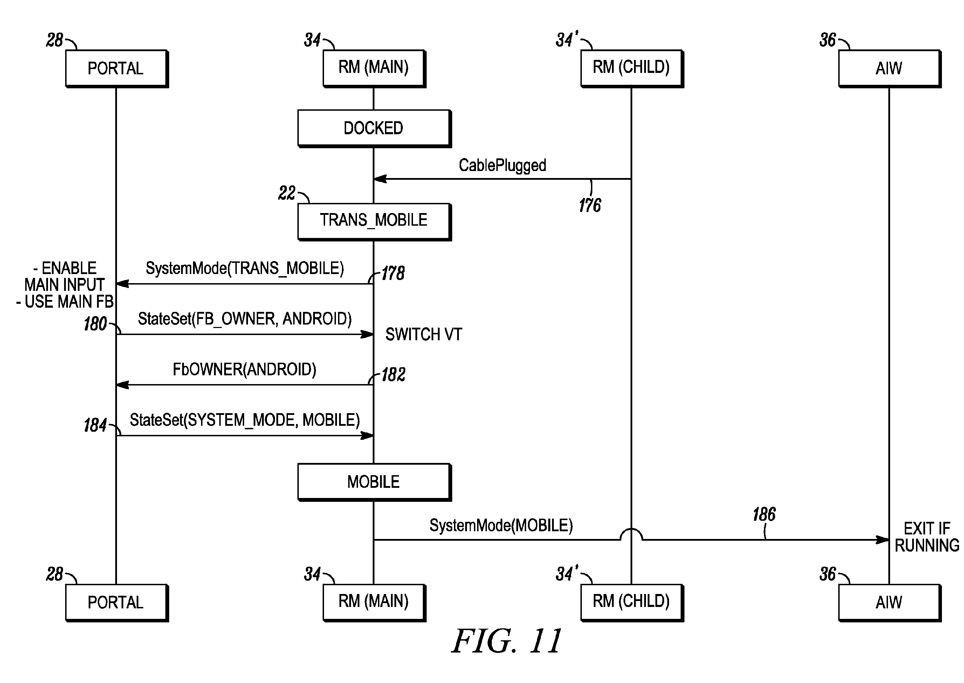

Referring to FIG. 11, a message sequence chart identifying the steps performed when the device 10 transitions from docked mode (OS2) to mobile mode (OS1) is provided. A cable signal 176 is received by the resource manager 34, which indicates that an HDMI or alternate hardwire plug has been removed from the device 10. Removal of the plug indicates that a peripheral device (not shown) is no longer in communication with the device 10. In an alternative embodiment, the plug can be wireless communication between the device 10 and a peripheral or alternate device (not shown). A sequence of signals transitioning the device from docked mode to mobile mode is initiated. Signal 178 is sent from the resource manager 34 to the portal activity 28 indicating a mode status transition and enabling the main data input and the main frame buffer. The portal activity 28 sends signal 180 to the resource manager 34 identifying the first OS 22 is now primary and switching the virtual terminal. Signal 182 is sent from the resource manager 34 to the portal activity identifying the first OS 22 as the primary and has taken ownership of the frame buffer. A mode state change confirmation signal 184 is sent from the portal activity 28 to the resource manager 34 identifying that the device is now in mobile mode and that the first OS 22 is the primary OS. A system mode update signal is sent from the resource manager 34 to AIW 36.

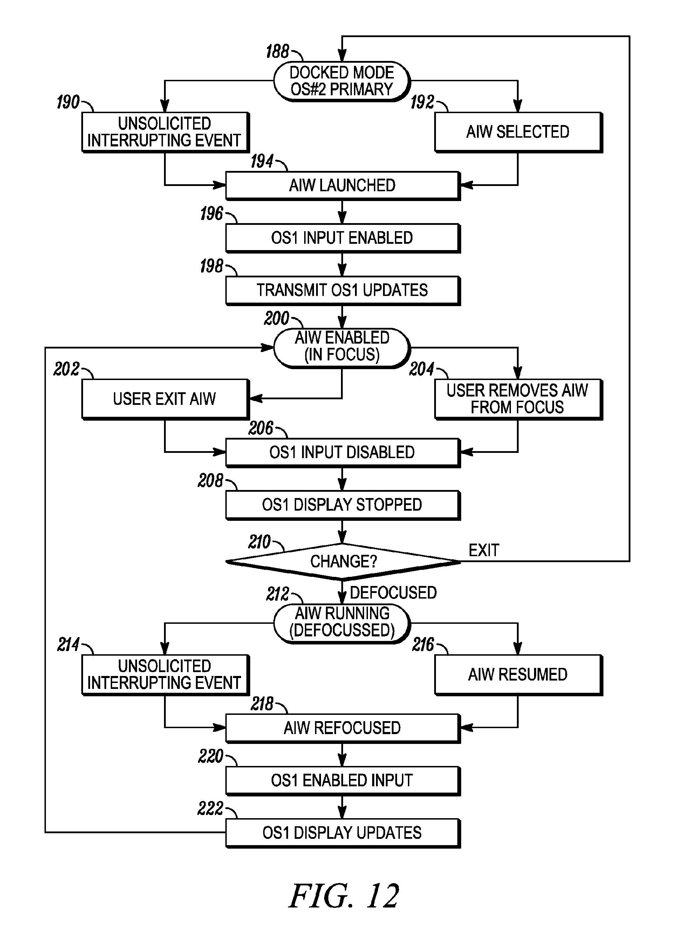

Referring to FIG. 12, the device 10 is idle in docked mode and the second OS 24 is the primary operating environment at step 188. If an unsolicited event occurs at step 190 or the user selects the OS1 22 in a window application at step 192, then the OS1 22 in a window application is launched at step 194. For example, if "Android" is the mobile operating environment 22, then "Android" in a Window application (AIW) is launched. The AIW application enables a user to access Android applications while the device is operating in the docked mode. The resource manager 34 is also notified of the status update at step 194. Input to the first OS 22 is enabled at step 196, followed by the transmission of first OS display update notifications at step 198. The AIW application is operating and has focus at step 200. If the AIW application is exited at step 202 or a user removes AIW from focus at step 204, then the first OS 22 input is disabled at step 206. The first OS 22 display is stopped at step 208. If the AIW application is exited at step 210, then the system reverts to the idle docked mode 188. Alternatively, if the AIW application is defocused then the application operates in this state at step 212. In the event of an unsolicited event at step 214 or a solicited interaction with the AIW application at step 216, the AIW regains focus at step 218. While the AIW is defocused a user can select the AIW application and continue interaction with the AIW window, which refocuses the AIW and notifies the resource manager 34 of the status update. After the AIW regains focus the first OS 22, which is Android for the present embodiment, input is enabled at step 220. The first OS 22 display update notifications are transmitted to the resource manager 34 at step 222, followed by the system reverting to step 200, where AIW is enabled and in focus. When an application is in focus, that application is at the logical top of a stack of running applications.

In an alternative embodiment, it is contemplated that the device 10 can transition between mode states based upon events other than docking or undocking the device 10. By example, if the device 10 is stationary for a preset period of time the device 10 can be programmed to operate in the most energy efficient mode state, regardless of the device status otherwise. In yet another example, a user can transition the mode state from docked to mobile even if the device has a connection with a peripheral device. Additionally, the type of peripheral device connected to the device 10 can dictate whether an automatic mode state change sequence is initiated or a user is provided a mode state change request. The user, thereby, being able to select the mode state in which to operate the device 10. In yet another alternative embodiment, additional mode states are contemplated based upon the particular device 10 usage and the applications available in the device memory 20.

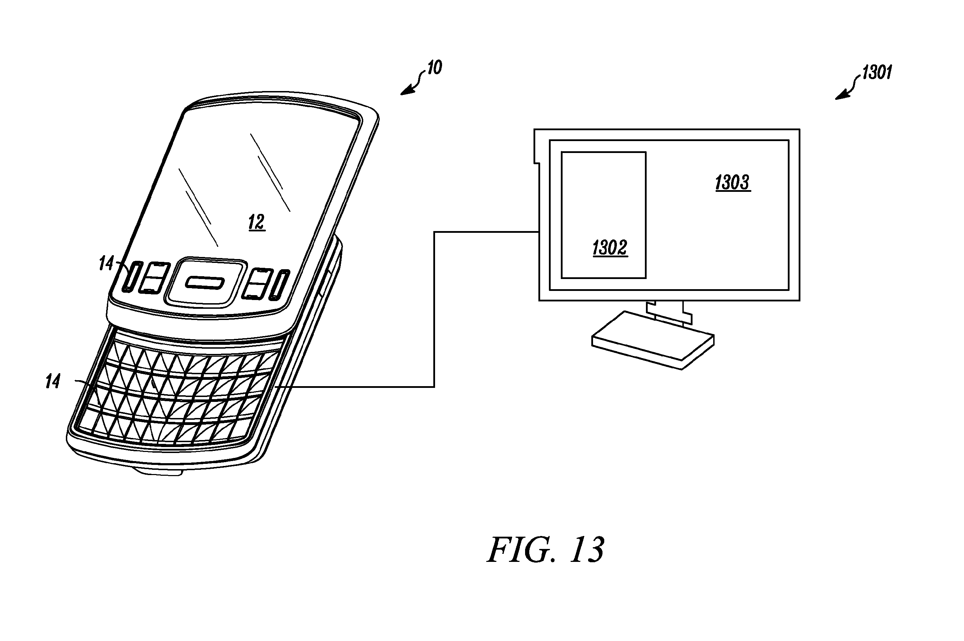

FIG. 13 illustrates one embodiment of device 10 operating in a docked mode, docked to a peripheral device (external display 1301). Screen 12 serves as a first GUI for a first operating system environment. External display 1301 serves as a second GUI for a second operating system environment, and may comprise such things as an external monitor, TV, Lap dock, smart dock, etc.

In this particular embodiment, external display 1301 comprises an external monitor attached to device 10 via a High Definition Multimedia Interface (HDMI). As shown, external display 1301 comprises window 1302 serving as a first GUI, and desktop/window 1303 serving as a second GUI. In this particular embodiment, window 1302 serves as a GUI representing a first operating system environment (e.g., OS 22), while desktop/window 1303 serves as a second GUI representing a second operating system environment (e.g., OS 24). It should be noted that window 1302 may replicate GUI 12. As discussed above, the first OS 22 and the second OS 24 are independent from each other, and co-exist with respect to the other. Each OS 22, 24 is a fully functioning operating system environment, and does not need the other operating system environment to function. The two operating system environments exist on the same device 10 with independence with respect to the other.

It should be noted that although not shown, each window 1302 and 1303 will contain icons and graphics that represent standard applications that me be run within each operating system environment.

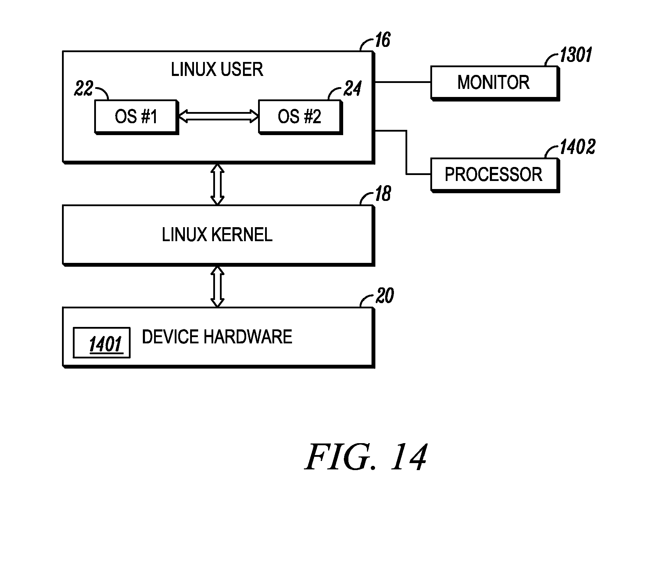

FIG.14 is a block diagram of device 10 and monitor 1301 of FIG. 13. Device 10 preferably comprises processor 1402 that runs OS 16. OS 16 can be a Linux distribution system, a Linux-based operating system or a non-Linux-based operating system. The device hardware 20 is also in communication with the Linux kernel 18. The operating system 16 run by processor 1402 includes first operating system environment 22 and second operating system environment 24 in communication with a single Linux kernel 18.

The device hardware 20 comprises memory storage 1401 such as random-access memory coupled to processor 1402 which stores computer executable instructions which are configured to perform various functions and operations, as described herein. As shown, monitor 1301 is coupled to operating system 16 such that first OS 22 and second OS 24 each output a GUI in a first and a second window on monitor 1301. One of the windows may comprise the whole desktop window, while another window may sit above the desktop window.

As mentioned above, when a single display device 1301 is utilized as a user interface to device 10 running multiple environments (e.g., Android and GNU Linux), a user may require two unlocking gestures, one for each window. Having multiple unlocks for multiple windows can be confusing to the user. To give a consistent look and feel it would be beneficial to give a user an option to use a single unlocking gesture when multiple runtime environments are simultaneously utilized. In order to address this issue, OS 22 will create a notification that will cause OS 24 to unlock its window whenever OS 22 unlocks its window. This will cause, OS 22 and OS 24 to appear to unlock simultaneously.

In a first embodiment of the present invention both OS 22 and OS 24 have an auto-sign-in service run on services 26 and 40, respectively. The auto-sign-in service is responsible for locking and unlocking windows 1302 and 1303. In this particular embodiment, a period of inactivity will cause the Android auto-sign-in service, running as part of services 26, to lock window 1302. When this happens, the Android auto-sign-in service will notify OS 24 of the locking event, causing OS 24 to lock window 1303. In particular the Linux auto-sign-in service will be notified by the Android auto-sign-in service. This will cause the Linux auto-sign-in service to lock window 1303. The Linux auto-sign-in service does not lock or unlock without being notified by the Android auto-sign-in service.

As known in the art, when a particular window is locked, it will no longer accept most inputs, and will show a blank screen. When activity is detected, an unlocking screen may appear, prompting the user for a gesture. When the gesture is input, the screen will be unlocked. Such gestures include, but are not limited to a password being input, a pattern being swiped, a fingerprint being scanned, etc.

When the Android auto-sign-in service detects an appropriate unlock gesture, it will unlock window 1302 and send a notification to the Linux auto-sign-in service. This will cause the Linux auto-sign-in service to unlock window 1303.

Thus, as shown in FIG. 13 and FIG. 14, a system is provided comprising a device 10 using a display 12 on the device as a graphical user interface. An external display 1301 is coupled to the device 10, where the external display 1301 comprises a first window 1302 and a second window 1303, where the first window 1302 replicates or represents the display 12 on the device 10. Both the first window 1302 and display 12 represent a first GUI used by device 10. A processor 1402 exists on the device 10 running a first operating system environment 22, running a second operating system environment 24. When the processor 1402 receives a locking event (e.g., no activity for a period of time), the processor 1402 locks the first window 1302 in response to the locking event. More particularly, the first window 1302 is locked by the first operating system environment 22. The processor 1402 sends a notification from the first operating system environment 22 to the second operating system environment 24, and locks the second window 1303 in response to the notification. In particular, the second window 1303 is locked by the second operating system environment.

An unlocking event (e.g. a gesture such as password being input, a pattern being swiped, or a fingerprint being scanned) may be received by processor 1402. This will cause OS 22 to unlock the first window 1302 in response to the unlocking event. The processor 1402 will send a notification from the first operating system 22 environment to the second operating system environment 24, causing the second operating system environment 24 to unlock the second window 1303 in response to the notification.

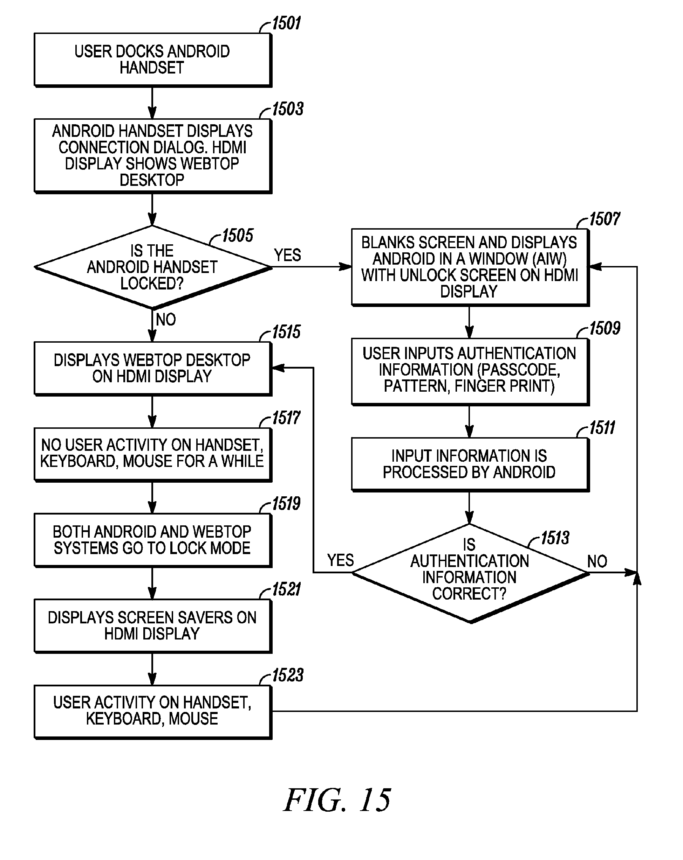

FIG. 15 is a flow chart showing operation of OS 22 and OS 24 in accordance with a first embodiment. The logic flow begins at step 1501 where a user will dock the android handset (device 10). At this point both OS 22 and OS 24 will display their appropriate windows on display 1301 (step 1503). OS 22 will then make a decision as to whether or not device 10 has been locked (step 1505). If it is determined that device 10 has been locked the logic flow continues to step 1507 where OS 22 locks its window (window 1302), displays an unlock window within window 1302, and sends a notification to OS 24 causing it to lock window 1303. In this embodiment when window 1303 is locked, it simply displays a black background with a centered unlock within window 1302. However, in alternate embodiments of the present invention, locked window 1303 may display different pictures or animations when locked.

At step 1509 window 1302 receives authentication information and OS 22 processes the information (step 1511) and determines if the gesture is adequate for unlocking window 1302 (step 1513). If, at step 1513, it is determined that the gesture will not unlock window 1302, the logic flow returns to step 1507, otherwise, the logic flow continues to step 1515.

At step 1515 OS 22 unlocks window 1302 and sends a notification to OS 24 causing it to unlock window 1303. At this point, both windows 1302 and 1303 unlock. At step 1517 OS 22 determines that inactivity has occurred for a predetermined period of time and both window 1302 and window 1303 are locked (step 1519). This is caused by OS 22 locking window 1302 and sending a notification to OS 24, causing OS 24 to lock window 1303. At this point in time screen saver images may appear on both windows (step 1521). If user activity is detected (step 1523) the logic flow returns to step 1507.

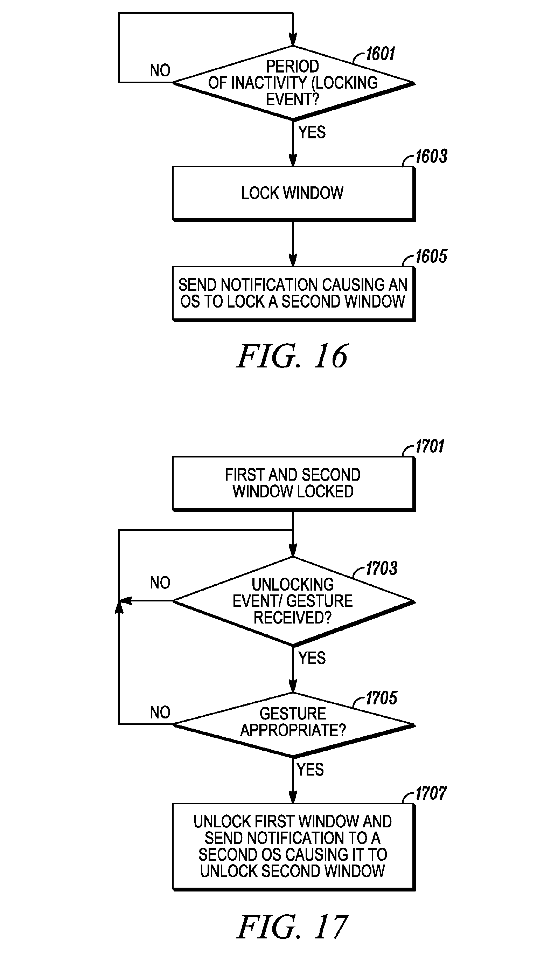

FIG. 16 is a flow chart showing operation of the device of FIG. 14. In particular, FIG. 16 shows those steps taken by the Android auto-sign-in service run by OS 22 during a locking event when device 10 is docked (coupled to display 1301). In this particular logic flow, a first operating system environment is run on processor 1402 using a first window as a first graphical user interface (GUI), and a second operating system environment is run on the processor 1402 using a second window as a second graphical user interface (GUI). In this example, a locking event comprises a period of inactivity.

The logic flow begins at step 1601 where OS 22 determines if a locking event has occurred. In particular, it is determined if there has been a period of inactivity for a predetermined period of time (e.g., 5 minutes). If there was a period of inactivity for a predetermined period of time, the logic flow continues on to step 1603, otherwise the logic flow returns to step 1601. At step 1603 OS 22 locks window 1302 in response to the locking event. The logic flow ends at to step 1605 where a notification is sent from OS 22 to OS 24. As discussed above, this notification causes OS 24 to lock window 1303.

FIG. 17 is a flow chart showing operation of the device of FIG. 14. In particular, FIG. 17 shows those steps taken by the Android auto-sign-in service during an unlocking event when device 10 is docked to display 1301. The logic flow begins at step 1701 where both windows 1302 and 1303 are locked. At step 1703 OS 22 determines if an unlocking event was received, and if not, the logic flow returns to step 1703. If, however, an unlocking event was received, the logic flow continues to step 1705 where it is determined if an appropriate gesture was received (e.g., appropriate password, appropriate fingerprint, appropriate swipe pattern, etc.). the Linux OS will send locking and unlocking notifications to the Android OS. It is specifically intended that the present invention not be limited to the embodiments and illustrations contained herein, but include modified forms of those embodiments including portions of the embodiments and combinations of elements of different embodiments as come within the scope of the following claims.

If, at step 1705 an appropriate gesture was not received, the logic flow returns to step 1703, otherwise the logic flow continues to step 1707 where OS 22 unlocks window 1302 in response to the unlocking event, and send a notification to OS 24, causing OS 24 to unlock window 1303.

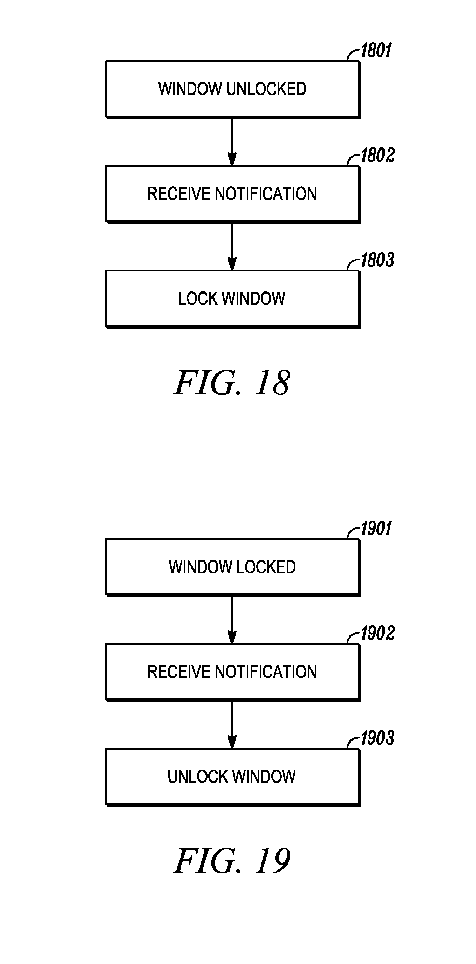

FIG. 18 is a flow chart showing operation of the device of FIG. 14. In particular, FIG. 18 shows those steps taken by OS 24 running Linux auto-sign-in service during a locking event. The logic flow begins at step 1801 where window 1303 is unlocked. At step 1803 a notification is received from OS 22 that indicates to OS 24 that window 1303 should be locked. The logic flow then continues to step 1805 where OS 24 locks window 1303.

FIG. 19 is a flow chart showing operation of the device of FIG. 14. In particular, FIG. 19 shows those steps taken by OS 24 running Linux auto-sign-in service during an unlocking event. The logic flow begins at step 1901 where window 1303 is locked. At step 1902 a notification is received from OS 22 that indicates to OS 24 that window 1303 should be unlocked. The logic flow then continues to step 1903 where OS 24 unlocks window 1303.

While the invention has been particularly shown and described with reference to a particular embodiment, it will be understood by those skilled in the art that various changes in form and details may be made therein without departing from the scope of the invention as defined by the appended claims. For example, the above description was given with respect to the Android OS receiving locking and unlocking events, and sending notifications to a Linux OS. It should be noted that in alternate embodiments of the present invention, it may be the Linux OS that receives locking and unlocking events. In this particular embodiment,

## Claims

1. A method comprising the steps of:
running in a device (10) having a processor (1402) a first operating system environment (22) on the processor (1402) using a first window as a first graphical user interface (GUI);
running a second operating system environment (24) on the processor (1402) using a second window as a second graphical user interface (GUI);
determining (1601) a locking event has occurred;
locking (1603) the first window in response to the locking event, wherein the first window is locked by the first operating system environment (22), the method being **characterized by**:
sending (1605) a notification from the first operating system environment (22) to the second operating system environment (24);
locking (1803) the second window in response to the notification, wherein the second window is locked by the second operating system environment (24); and
in response to an unlocking event:
unlocking the first window by the first operating system environment (22), and
unlocking the second window by the second operating system environment (24).

2. The method of claim 1 wherein the first and the second operating system independently co-exist on a core kernel (18).

3. The method of claim 1 wherein the first (22) and second (24) operating system environments comprise a Windows-based environment, a Symbian environment or a Linux operating system environment.

4. The method of claim 1 wherein the first window (1302) and the second window (1303) exist on a display (1301) coupled to the device (10), and wherein the first window comprises a window (12) representing a first GUI used on the device.

5. The method of claim 1 wherein unlocking the second window comprises sending a second notification from the first operating system environment to the second operating system environment and unlocking the second window in response to the second notification.

6. The method of claim 5 wherein the unlocking event comprises an unlocking gesture.

7. The method of claim 6 wherein the unlocking gesture comprises a password being input, a pattern being swiped, or a fingerprint being scanned.

8. The method of claim 1, further comprising coupling the device (10) to an external display (1301), the external display (1301) comprising the first window (1302) and the second window (1303), and replicating a device display 12 in the first window (1302).

9. A device (10) comprising:
a processor (1402) configured to perform the steps of:
running a first operating system environment (22) using a first window as a first graphical user interface (GUI);
running a second operating system environment (24) using a second window as a second graphical user interface (GUI);
receiving a locking event;
locking the first window in response to the locking event, wherein the first window is locked by the first operating system environment (22),
the device being **characterized in that** the processor (1402) is configured to perform the steps of:
sending a notification from the first operating system environment (22) to the second operating system environment (24) ;
locking the second window in response to the notification, wherein the second window is locked by the second operating system environment (24); and
in response to an unlocking event:
unlocking the first window by the first operating system environment (22), and
unlocking the second window by the second operating system environment (24).

10. The device of claim 9 wherein the first and the second operating system independently co-exist on a core kernel (18).

11. The device of claim 9 wherein the first (22) and second (24) operating system environments comprise one of a Windows-based environment, a Symbian environment or a Linux operating system environment.

12. The device of claim 9 wherein the first window (1302) and the second window (1303) exist on a display (1301) external to the device (10), and coupled to the device (10), and wherein the first window (1302) comprises a window (12) representing a first GUI used on the device (10).

13. The device of claim 9 wherein the processor (1402) is configured to unlock the second window in response to a second notification from the first operating system environment to the second operating system environment.

14. The device of claim 13 wherein the unlocking event comprises an unlocking gesture.

15. The device of claim 13 wherein the unlocking gesture comprises a password being input, a pattern being swiped, or a fingerprint being scanned.

## Patentansprüche

1. Verfahren, das die folgenden Schritte aufweist:
Betreiben in einer Vorrichtung (10) mit einem Prozessor (1402) einer ersten Betriebssystem-Umgebung (22) auf dem Prozessor (1402) unter Verwendung eines ersten Fensters als erste grafische Benutzeroberfläche (GBO);
Betreiben einer zweiten Betriebssystem-Umgebung (24) auf dem Prozessor (1402) unter Verwendung eines zweiten Fensters als zweite grafische Benutzeroberfläche (GBO);
Bestimmen (1601), dass ein Verriegelungsvorgang stattgefunden hat;
Verriegeln (1603) des ersten Fensters ansprechend auf den Verriegelungsvorgang, wobei das erste Fenster von der ersten Betriebssystem-Umgebung (22) verriegelt wird, wobei das Verfahren durch Folgendes gekennzeichnet ist:
Senden (1605) einer Benachrichtigung von der ersten Betriebssystem-Umgebung (22) an die zweite Betriebssystem-Umgebung (24);
Verriegeln (1803) des zweiten Fensters ansprechend auf die Benachrichtigung, wobei das zweite Fenster von der zweiten Betriebssystem-Umgebung (24) verriegelt wird; und
ansprechend auf einen Entriegelungsvorgang:
Entriegeln des ersten Fensters durch die erste Betriebssystem-Umgebung (22), und
Entriegeln des zweiten Fensters durch die zweite Betriebssystem-Umgebung (24).

2. Verfahren nach Anspruch 1, wobei das erste und das zweite Betriebssystem unabhängig voneinander auf einem Betriebssystemkern (18) koexistieren.

3. Verfahren nach Anspruch 1, wobei die erste (22) und die zweite (24) Betriebssystem-Umgebung eine Windows-basierte Umgebung, eine Symbian-Umgebung oder eine Linux-Betriebssystem-Umgebung aufweisen.

4. Verfahren nach Anspruch 1, wobei das erste Fenster (1302) und das zweite Fenster (1303) auf einer Anzeige (1301) bestehen, die mit der Vorrichtung (10) verbunden ist, und wobei das erste Fenster ein Fenster (12) aufweist, das eine erste GBO darstellt, die auf der Vorrichtung verwendet wird.

5. Verfahren nach Anspruch 1, wobei das Entriegeln des zweiten Fensters ein Senden einer zweiten Benachrichtigung von der ersten Betriebssystem-Umgebung an die zweite
Betriebssystem-Umgebung und ein Entriegeln des zweiten Fensters ansprechend auf die zweite Benachrichtigung aufweist.

6. Verfahren nach Anspruch 5, wobei der Entriegelungsvorgang eine Entriegelungsgeste aufweist.

7. Verfahren nach Anspruch 6, wobei die Entriegelungsgeste ein einzugebendes Passwort, ein zu wischendes Muster oder einen zu scannenden Fingerabdruck aufweist.

8. Verfahren nach Anspruch 1, das ferner ein Verbinden der Vorrichtung (10) mit einer externen Anzeige (1301), wobei die externe Anzeige (1301) das erste Fenster (1302) und das zweite Fenster (1303) aufweist, und ein Reproduzieren einer Vorrichtungsanzeige (12) in dem ersten Fenster (1302) aufweist.

9. Vorrichtung (10), die Folgendes aufweist:
einen Prozessor (1402), der zur Durchführung der folgenden Schritte ausgestaltet ist:
Betreiben einer ersten Betriebssystem-Umgebung (22) unter Verwendung eines ersten Fensters als erste grafische Benutzeroberfläche (GBO);
Betreiben einer zweiten Betriebssystem-Umgebung (24) unter Verwendung eines zweiten Fensters als zweite grafische Benutzeroberfläche (GBO);
Empfangen eines Verriegelungsvorgangs;
Verriegeln des ersten Fensters ansprechend auf den Verriegelungsvorgang, wobei das erste Fenster von der ersten Betriebssystem-Umgebung (22) verriegelt wird,
wobei die Vorrichtung **dadurch gekennzeichnet ist, dass** der Prozessor (1402) zur Durchführung der folgenden Schritte ausgestaltet ist:
Senden einer Benachrichtigung von der ersten Betriebssystem-Umgebung (22) an die zweite Betriebssystem-Umgebung (24);
Verriegeln des zweiten Fensters ansprechend auf die Benachrichtigung, wobei das zweite Fenster von der zweiten Betriebssystem-Umgebung (24) verriegelt wird; und
ansprechend auf einen Entriegelungsvorgang:
Entriegeln des ersten Fensters durch die erste Betriebssystem-Umgebung (22), und
Entriegeln des zweiten Fensters durch die zweite Betriebssystem-Umgebung (24).

10. Vorrichtung nach Anspruch 9, wobei das erste und das zweite Betriebssystem unabhängig voneinander auf einem Betriebssystemkern (18) koexistieren.

11. Vorrichtung nach Anspruch 9, wobei die erste (22) und die zweite (24) Betriebssystem-Umgebung entweder eine Windows-basierte Umgebung, eine Symbian-Umgebung oder eine Linux-Betriebssystem-Umgebung aufweisen.

12. Vorrichtung nach Anspruch 9, wobei das erste Fenster (1302) und das zweite Fenster (1303) auf einer Anzeige (1301) außerhalb der Vorrichtung (10) bestehen, die mit der Vorrichtung (10) verbunden ist, und wobei das erste Fenster (1302) ein Fenster (12) aufweist, das eine erste GBO darstellt, die auf der Vorrichtung (10) verwendet wird.

13. Vorrichtung nach Anspruch 9, wobei der Prozessor (1402) dazu ausgestaltet ist, das zweite Fenster ansprechend auf eine zweite Benachrichtigung von der ersten Betriebssystem-Umgebung an die zweite Betriebssystem-Umgebung zu entriegeln.

14. Vorrichtung nach Anspruch 13, wobei der Entriegelungsvorgang eine Entriegelungsgeste aufweist.

15. Vorrichtung nach Anspruch 13, wobei die Entriegelungsgeste ein einzugebendes Passwort, ein zu wischendes Muster oder einen zu scannenden Fingerabdruck aufweist.

## Revendications

1. Procédé comprenant les étapes suivantes :
l'exécution dans un dispositif (10) comprenant un processeur (1402) d'un premier environnement de système d'exploitation (22) sur le processeur (1402) au moyen d'une première fenêtre comme une première interface utilisateur graphique (IUG) ;
l'exécution d'un second environnement de système d'exploitation (24) sur le processeur (1402) au moyen d'une seconde fenêtre comme une seconde interface utilisateur graphique (IUG) ;
la détermination (1601) qu'un événement de verrouillage s'est produit ;
le verrouillage (1603) de la première fenêtre en réponse à l'événement de verrouillage, dans lequel la première fenêtre est verrouillée par le premier environnement de système d'exploitation (22), le procédé étant **caractérisé par** :
l'envoi (1605) d'une notification du premier environnement de système d'exploitation (22) au second environnement de système d'exploitation (24) ;
le verrouillage (1803) de la seconde fenêtre en réponse à la notification, dans lequel la seconde fenêtre est verrouillée par le second environnement de système d'exploitation (24) ; et
en réponse à un événement de déverrouillage :
le déverrouillage de la première fenêtre par le premier environnement de système d'exploitation (22), et
le déverrouillage de la seconde fenêtre par le second environnement de système d'exploitation (24).

2. Procédé selon la revendication 1 dans lequel les premier et second systèmes d'exploitation coexistent indépendamment sur un noyau central (18).

3. Procédé selon la revendication 1 dans lequel les premier (22) et second (24) environnements de système d'exploitation comprennent un environnement basé sur Windows, un environnement Symbian ou un environnement de système d'exploitation Linux.

4. Procédé selon la revendication 1 dans lequel la première fenêtre (1302) et la seconde fenêtre (1303) existent sur un écran (1301) couplé au dispositif (10), et dans lequel la première fenêtre comprend une fenêtre (12) représentant une première IUG utilisée sur le dispositif.

5. Procédé selon la revendication 1 dans lequel le déverrouillage de la seconde fenêtre comprend l'envoi d'une seconde notification du premier environnement de système d'exploitation au second environnement de système d'exploitation et le déverrouillage de la seconde fenêtre en réponse à la seconde notification.

6. Procédé selon la revendication 5 dans lequel l'événement de déverrouillage comprend un geste de déverrouillage.

7. Procédé selon la revendication 6 dans lequel le geste de déverrouillage comprend un mot de passe qui doit être entré, un motif qui doit être formé par balayage ou une empreinte digitale qui doit être scannée.

8. Procédé selon la revendication 1, comprenant en outre le couplage du dispositif (10) à un écran externe (1301), l'écran externe (1301) comprenant la première fenêtre (1302) et la seconde fenêtre (1303), et la reproduction d'un écran de dispositif (12) dans la première fenêtre (1302).

9. Dispositif (10) comprenant :
un processeur (1402) configuré pour réaliser les étapes suivantes :
l'exécution d'un premier environnement de système d'exploitation (22) au moyen d'une première fenêtre comme une interface utilisateur graphique (IUG) ;
l'exécution d'un second environnement de système d'exploitation (24) au moyen d'une seconde fenêtre comme une seconde interface utilisateur graphique (IUG) ;
la réception d'un événement de verrouillage ;
le verrouillage de la première fenêtre en réponse à l'événement de verrouillage, dans lequel la première fenêtre est verrouillée par le premier environnement de système d'exploitation (22),
le dispositif étant **caractérisé en ce que** le processeur (1402) est configuré pour réaliser les étapes suivantes :
l'envoi d'une notification du premier environnement de système d'exploitation (22) au second environnement de système d'exploitation (24) ;
le verrouillage de la seconde fenêtre en réponse à la notification, dans lequel la seconde fenêtre est verrouillée par le second environnement de système d'exploitation (24) ; et
en réponse à un événement de déverrouillage :
le déverrouillage de la première fenêtre par le premier environnement de système d'exploitation (22), et
le déverrouillage de la seconde fenêtre par le second environnement de système d'exploitation (24).

10. Dispositif selon la revendication 9 dans lequel les premier et second systèmes d'exploitation coexistent indépendamment sur un noyau central (18).

11. Dispositif selon la revendication 9 dans lequel les premier (22) et second (24) environnements de système d'exploitation comprennent un environnement basé sur Windows ou un environnement Symbian ou un environnement de système d'exploitation Linux.

12. Dispositif selon la revendication 9 dans lequel la première fenêtre (1302) et la seconde fenêtre (1303) existent sur un écran (1301) externe au dispositif (10), et couplé au dispositif (10), et dans lequel la première fenêtre (1302) comprend une fenêtre (12) représentant une première IUG utilisée sur le dispositif (10).

13. Dispositif selon la revendication 9 dans lequel le processeur (1402) est configuré pour déverrouiller la seconde fenêtre en réponse à une seconde notification du premier environnement de système d'exploitation au second environnement de système d'exploitation.

14. Dispositif selon la revendication 13 dans lequel l'événement de déverrouillage comprend un geste de déverrouillage.

15. Dispositif selon la revendication 13 dans lequel le geste de déverrouillage comprend un mot de passe qui doit être entré, un motif qui doit être formé par balayage ou une empreinte digitale qui doit être scannée.
